# EUROPEAN PATENT APPLICATION

(11) **EP 3 842 961 A2**
(43) Date of publication of application: **30.06.2021**
(21) Application number: 21164657.5
(22) Date of filing: 24.03.2021
(51) Int. Cl.: G06F 16/35, G06F 16/955

(54) **METHOD AND APPARATUS FOR MINING TAG, DEVICE, STORAGE MEDIUM AND COMPUTER PROGRAM PRODUCT**

(30) Priority: 11.08.2020 CN 202010802838
(71) Applicant: BEIJING BAIDU NETCOM SCIENCE AND TECHNOLOGY CO. LTD., 100085 Beijing (CN)
(72) Inventor: LEI, Qian, Beijing, 100085 (CN); XIONG, Zhuang, Beijing, 100085 (CN); ZHANG, Xiangxiang, Beijing, 100085 (CN); YAO, Houqing, Beijing, 100085 (CN); SHI, Peng, Beijing, 100085 (CN)
(74) Representative: Witte, Weller & Partner Patentanwälte mbB

(57) **Abstract**

The present disclosure discloses a method and apparatus for mining a tag, a device, a storage medium and a computer program product, and relates to a big data technology in the field of artificial intelligence, specifically to natural language processing, intelligent search, and intelligent recommendation technologies. A specific implementation solution includes: determining an existing tag and a category of the existing tag; determining a candidate tag from a target text associated with the category based on the existing tag; and combining the existing tag and the candidate tag, and determining a new tag based on a combining result. The technology according to the present disclosure realizes mining of an accurate tag based on an existing tag.

## Description

### TECHNICAL FIELD

Embodiments of the present disclosure relate to a big data technology in the field of artificial intelligence, specifically to natural language processing, intelligent search, and intelligent recommendation technologies, and more specifically to a method and apparatus for mining a tag, a device, a storage medium, and a computer program product.

### BACKGROUND

A tag is a common content understanding carrier. Generally, a piece of content on the Internet may be abstracted into a few tags, and provided to a search engine or a recommendation engine, to obtain better presentation and distribution effects.

After a tag that accurately depicts a text content is provided to the search engine or the recommendation engine, a text will be accurately distributed and presented to a user, thereby improving the user's information acquisition efficiency and user experience.

### SUMMARY

Embodiments of the present disclosure provide a method and apparatus for mining a tag, a device, a storage medium, and a computer program product.

In an aspect, an embodiment of the present disclosure provides a method for mining a tag, the method including: determining an existing tag and a category of the existing tag; determining a candidate tag from a target text associated with the category based on the existing tag; and combining the existing tag and the candidate tag, and determining a new tag based on a combining result.

In another aspect, an embodiment of the present disclosure provides an apparatus for mining a tag, the apparatus including: a category determining module configured to determine an existing tag and a category of the existing tag; a tag determining module configured to determine a candidate tag from a target text associated with the category based on the existing tag; and a tag combining module configured to combine the existing tag and the candidate tag, and determine a new tag based on a combining result.

In a further aspect, an embodiment of the present disclosure provides an electronic device, the device electronic including: at least one processor; and a memory communicatively connected with the at least one processor, the memory storing instructions executable by the at least one processor, and the instructions, when executed by the at least one processor, causing the at least one processor to perform the method according to any embodiment of the present disclosure.

In a further aspect, an embodiment of the present disclosure provides a non-transitory computer readable storage medium storing computer instructions, the computer instructions being used to cause a computer to perform the method according to any embodiment of the present disclosure.

In a further aspect, an embodiment of the present disclosure provides a computer program product including a computer program, where the computer program, when executed by a processor, implements the method according to any embodiment of the present disclosure.

The technology according to embodiments of the present disclosure realizes mining of an accurate tag based on an existing tag.

It should be understood that the content described in this section is neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of the present solution, and do not impose a limitation on the present disclosure.
Fig. 1 is a flowchart of a method for mining a tag provided in an embodiment of the present disclosure;
Fig. 2 is a flowchart of another method for mining a tag provided in an embodiment of the present disclosure;
Fig. 3 is a flowchart of still another method for mining a tag provided in an embodiment of the present disclosure;
Fig. 4 is a flowchart of still another method for mining a tag provided in an embodiment of the present disclosure;
Fig. 5 is a flowchart of still another method for mining a tag provided in an embodiment of the present disclosure;
Fig. 6 is a flowchart of still another method for mining a tag provided in an embodiment of the present disclosure;
Fig. 7 is a schematic flowchart of still another method for mining a tag provided in an embodiment of the present disclosure;
Fig. 8 is a schematic structural diagram of an apparatus for mining a tag provided in an embodiment of the present disclosure; and
Fig. 9 is a block diagram of an electronic device of the method for mining a tag according to embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications can be made to the embodiments described here without departing from the scope and spirit of the present disclosure. Similarly, for clearness and conciseness, descriptions of well-known functions and structures are omitted in the following description.

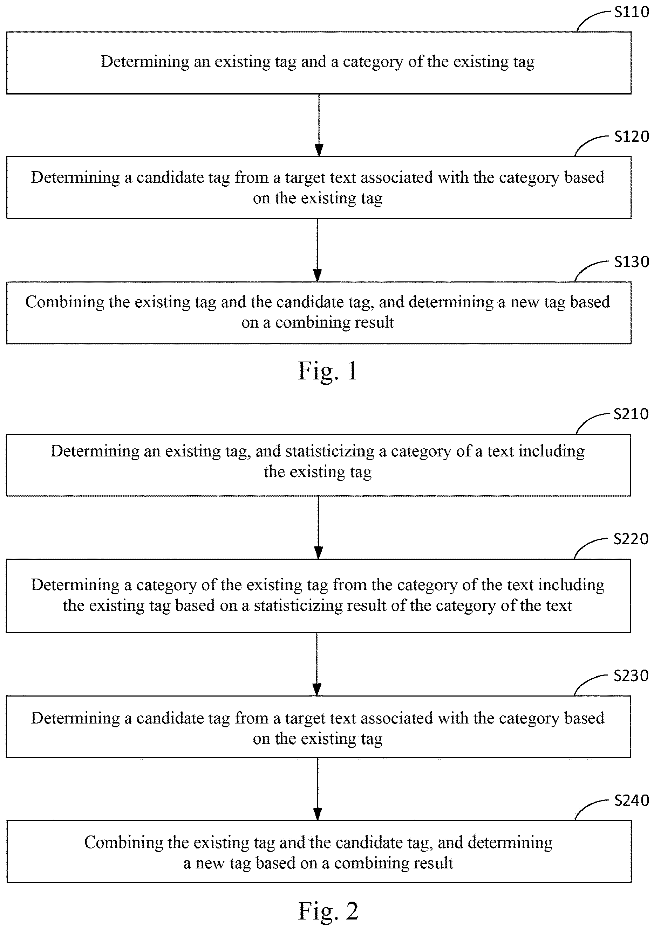

Fig. 1 is a flowchart of a method for mining a tag provided in an embodiment of the present disclosure. The present embodiment is applicable to a case of mining an accurate tag that accurately depicts a text content. The method may be executed by an apparatus for mining a tag. The apparatus may be implemented by software and/or hardware. Referring to Fig. 1, the method for mining a tag provided in an embodiment of the present disclosure includes following steps.

S110: determining an existing tag and a category of the existing tag.

The existing tag refers to a tag that has been extracted based on an existing technology.

The category of the existing tag refers to a category to which the existing tag belongs.

In an embodiment, the determining the existing tag includes: extracting the existing tag from a text according to an existing tag extracting algorithm.

S120: determining a candidate tag from a target text associated with the category based on the existing tag.

The target text refers to a text having the category of the existing tag.

For example, if the category of the existing tag is food, then the target text is a text about food.

The candidate tag refers to a tag to be used to generate a new tag with the existing tag.

In an embodiment, the determining the candidate tag from the target text associated with the category based on the existing tag includes: using another tag that co-occurs with the existing tag in the target text as the candidate tag.

S130: combining the existing tag and the candidate tag, and determining a new tag based on a combining result.

The new tag refers to a new tag that is mined based on the existing tag.

In an embodiment, the determining the new tag based on the combining result includes: using a combined tag group as the new tag.

In an embodiment of the present disclosure, a candidate tag is determined from a target text associated with a category of an existing tag based on the existing tag; the existing tag and the candidate tag are combined, and a new tag is determined based on a combining result, thereby realizing mining of a new tag based on the existing tag.

In addition, the candidate tag is determined from the target text associated with the category of the existing tag, to limit a computing range of a combined tag, and eliminate tags that explicitly do not have a combination potential. The tags that do not have a combination potential refer to tags with a meaning after splitting being equal to a meaning before splitting. For example, such tags may be "summer vegetables" and "summer travel." Because a combination of tags that have a combination potential can accurately depict a text content, the present solution can realize mining of an accurate tag, and will, after providing the accurate tag to a search engine or a recommendation engine, accurately distribute and present a text to a user, thereby improving the user's information acquisition efficiency and user experience.

In order to solve the problem that the existing tag is too fixed to reflect the user needs in time, the determining the existing tag includes: determining a tag with a popularity degree greater than a preset popularity threshold, and using the tag as the existing tag.

The preset popularity threshold may be determined based on actual requirements. The present embodiment does not impose any limitation on this.

The tag with the popularity degree greater than the preset popularity threshold is a tag with higher timeliness, i.e., a popular tag at the moment, e.g., "Qiafan (with the meaning of eating)," and "back rise."

Adding such a tag to the existing tag can improve the timeliness of the existing tag, and solve the problem that the existing tag is too fixed to reflect the user needs in time.

Fig. 2 is a flowchart of another method for mining a tag provided in an embodiment of the present disclosure. The present solution is specific optimization of the step "determining a category of the existing tag" based on the above solution. Referring to Fig. 2, the method for mining a tag provided in the present solution includes following steps.

S210: determining an existing tag, and statisticizing a category of a text including the existing tag.

The category of the text refers to a category to which the text belongs. For example, the category of the text may be food, entertainment, or the like.

S220: determining a category of the existing tag from the category of the text including the existing tag based on a statisticizing result of the category of the text.

The category of the existing tag refers to a category to which the existing tag belongs.

In an embodiment, the determining the category of the existing tag from the category of the text including the existing tag based on the statisticizing result of the category of the text includes: using a statisticized category with a largest number as the category of the existing tag.

For example, if the statisticizing result of the category of the text includes 80 food texts and 20 entertainment texts, then the category of the existing tag is determined to be food.

S230: determining a candidate tag from a target text associated with the category based on the existing tag.

For example, further taking the category of the existing tag being food as an example, the determining the candidate tag from the target text associated with the category of the existing tag based on the existing tag includes: determining the candidate tag from a food text based on the existing tag.

S240: combining the existing tag and the candidate tag, and determining a new tag based on a combining result.

The present solution statisticizes a category of a text including an existing tag; and determines a category of the existing tag from the category of the text including the existing tag based on a statisticizing result of the category of the text, thereby improving the accuracy rate of determining the existing tag, and further limiting a computing range of a combined tag to eliminate tags that explicitly do not have a combination potential.

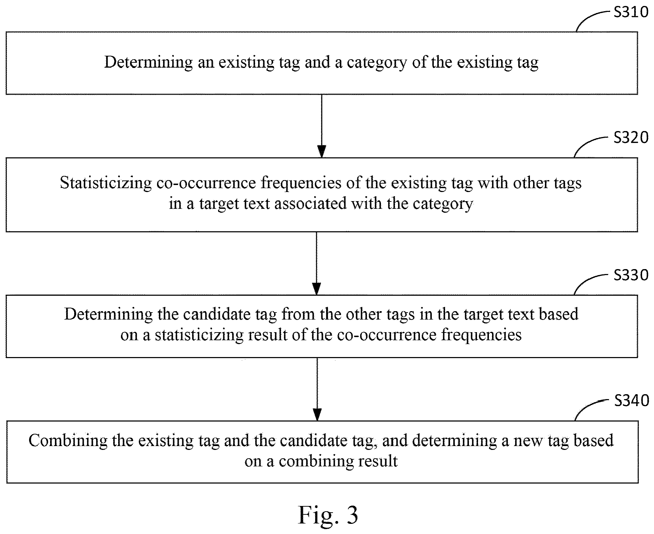

Fig. 3 is a flowchart of still another method for mining a tag provided in an embodiment of the present disclosure. The present solution is specific optimization of the step "determining a candidate tag from a target text associated with the category based on the existing tag" based on the above solutions. Referring to Fig. 3, the method for mining a tag provided in the present solution includes following steps.

S310: determining an existing tag and a category of the existing tag.

S320: statisticizing co-occurrence frequencies of the existing tag with other tags in a target text associated with the category.

The other tags refer to tags except for the existing tag in the target text.

The co-occurrence frequency refers to the number of co-occurrences in the target text.

S330: determining the candidate tag from the other tags in the target text based on a statisticizing result of the co-occurrence frequencies.

In an embodiment, the determining the candidate tag from the other tags in the target text based on the statisticizing result of the co-occurrence frequencies includes: using one of the other tags with a highest co-occurrence frequency as the candidate tag.

S340: combining the existing tag and the candidate tag, and determining a new tag based on a combining result.

The present solution statisticizes co-occurrence frequencies of an existing tag with other tags in a target text; and determines a candidate tag from the other tags in the target text based on a statisticizing result of the co-occurrence frequencies, thereby improving the accuracy rate of determining the candidate tag. Because tags with a combination potential usually have a highest co-occurrence frequency in a text, the present solution further limits a computing range of a combined tag, and further eliminates tags that explicitly do not have a combination potential.

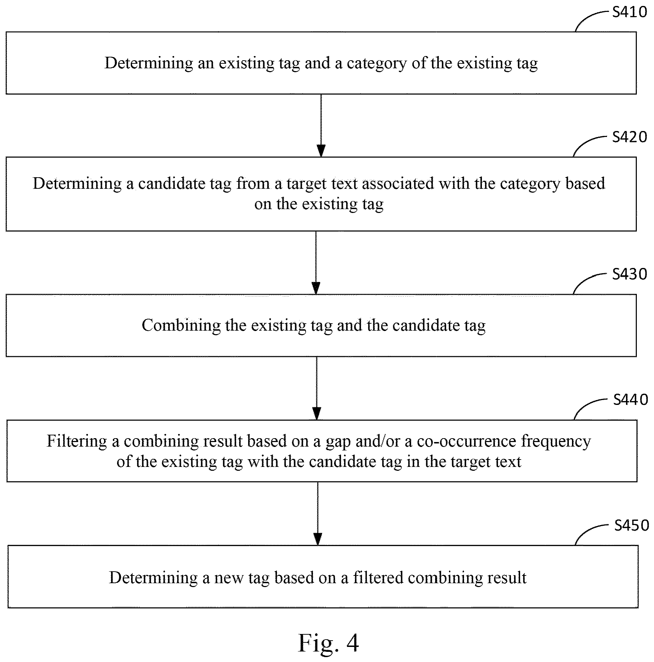

Fig. 4 is a flowchart of still another method for mining a tag provided in an embodiment of the present disclosure. The present solution is further extension of the above solutions based on the above solutions. Referring to Fig. 4, the method for mining a tag provided in the present solution includes following steps.

S410: determining an existing tag and a category of the existing tag.

S420: determining a candidate tag from a target text associated with the category based on the existing tag.

S430: combining the existing tag and the candidate tag.

S440: filtering a combining result based on a gap and/or a co-occurrence frequency of the existing tag with the candidate tag in the target text.

The gap between the existing tag and the candidate tag in the target text may also be understood as a distance between the existing tag and the candidate tag in the target text. If the distance is large, then it is less probable to form a new tag. Therefore, this part of the combining result is eliminated.

The co-occurrence frequency of the existing tag with the candidate tag in the target text may also be understood as a frequency of co-occurrence of the existing tag with the candidate tag. If the frequency is too large or too small, the tag combination is not good, such that this part of the combining result is also eliminated.

S450: determining a new tag based on a filtered combining result.

The present solution filters a combining result based on a gap and/or a co-occurrence frequency of an existing tag with a candidate tag in a target text, thereby improving the accuracy rate of the combining result, and further improving the accuracy rate of a new tag.

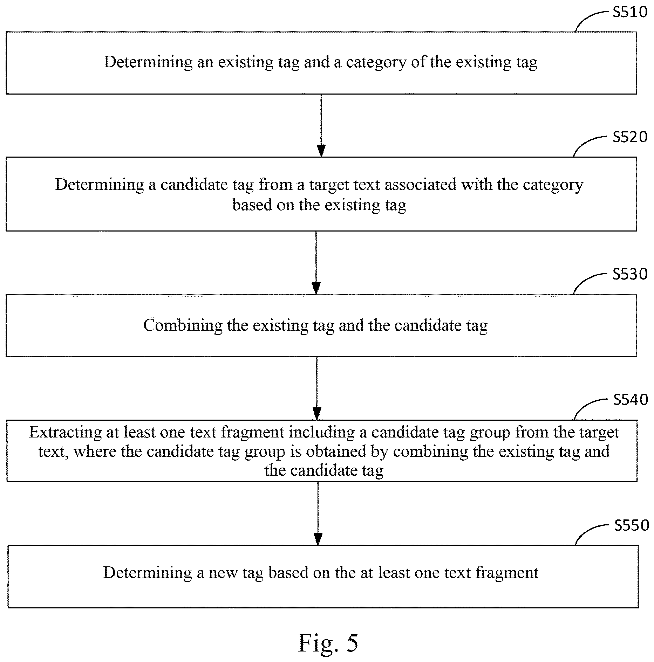

Fig. 5 is a flowchart of still another method for mining a tag provided in an embodiment of the present disclosure. The present solution is specific optimization of the step "determining a new tag based on a combining result" based on the above solutions . Referring to Fig. 5, the method for mining a tag provided in the present solution includes following steps.

S510: determining an existing tag and a category of the existing tag.

S520: determining a candidate tag from a target text associated with the category based on the existing tag.

S530: combining the existing tag and the candidate tag.

S540: extracting at least one text fragment including a candidate tag group from the target text, where the candidate tag group is obtained by combining the existing tag and the candidate tag.

Typically, the text fragment may be a sentence.

S550: determining a new tag based on the at least one text fragment.

In an embodiment, any one of the at least one text fragment may be used as the new tag.

To simplify the new tag, the determining the new tag based on the at least one text fragment includes: extracting main component information of the text fragment to obtain at least one main text component; and determining the new tag from the at least one main text component.

The main component information of the text fragment refers to component information that determines a basic structure of a sentence.

In an embodiment, the extracting the main component information of the text fragment includes: deleting a modifier, a prefix, and a suffix in the text fragment.

The main text component refers to main component information of the text fragment.

The present solution extracts at least one text fragment including a candidate tag group from a target text; and determines a new tag based on the at least one text fragment, thereby optimizing the expression of the new tag, and facilitating understanding by users.

To improve the accuracy rate of the new tag, the determining the new tag from the at least one text component includes: statisticizing the at least one main text component, to determine a target main text component from the at least one main text component based on a statisticizing result of the at least one main text component, and using the target main text component as the new tag.

The target main text component refers to a main text component that can accurately describe the new tag.

In an embodiment, the determining the target main text component from the at least one main text component based on the statisticizing result of the at least one main text component includes: using a most frequently occurring main text component in the statisticizing result of the at least one main text component as the target main text component.

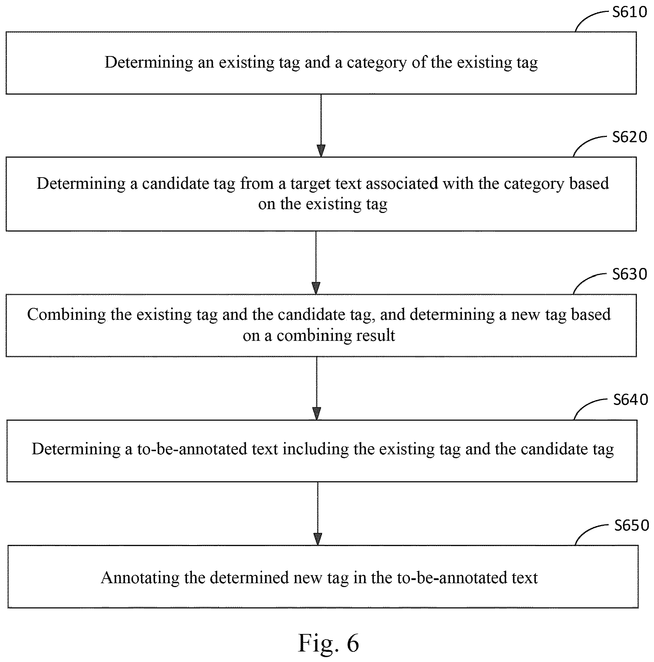

Fig. 6 is a flowchart of still another method for mining a tag provided in an embodiment of the present disclosure. The present solution is extension of the above solutions based on the above solutions. Referring to Fig. 6, the method for mining a tag provided in the present solution includes following steps.

S610: determining an existing tag and a category of the existing tag.

S620: determining a candidate tag from a target text associated with the category based on the existing tag.

S630: combining the existing tag and the candidate tag, and determining a new tag based on a combining result.

S640: determining a to-be-annotated text including the existing tag and the candidate tag.

S650: annotating the determined new tag in the to-be-annotated text.

The present solution determines a to-be-annotated text including an existing tag and a candidate tag; and annotates a determined new tag in the to-be-annotated text, thereby realizing tag annotation of the to-be-annotated text using the new tag.

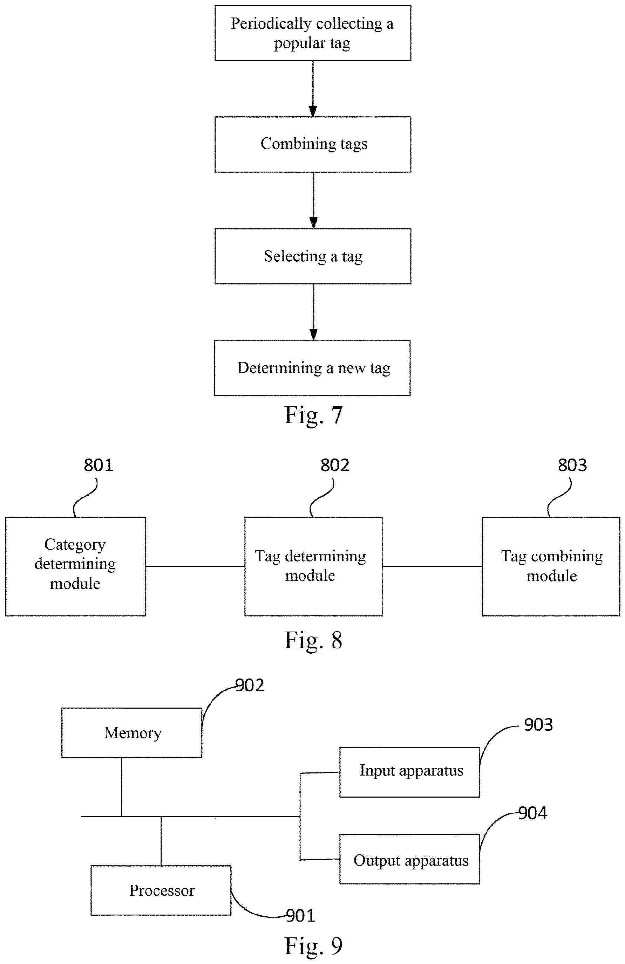

Fig. 7 is a schematic flowchart of still another method for mining a tag provided in an embodiment of the present disclosure. The present solution is an alternative solution provided based on the above solutions. Referring to Fig. 7, the method for mining a tag provided in the present solution includes: adding a popular tag to a collected text set; extracting a tag of each text in the text set to obtain a tag set; de-duplicating an obtained tag set, and using a remaining tag as an existing tag; determining, based on a category of a text associated with the existing tag, a category of the existing tag; determining a candidate tag from other tags in a target text of the corresponding category based on a co-occurrence frequency; combining the existing tag and the candidate tag to obtain a candidate tag group; filtering the candidate tag group based on a gap and a co-occurrence frequency of the existing tag with the candidate tag in the candidate tag group in the target text, to obtain a target tag group; extracting at least one sentence with co-occurrence of each tag in the target tag group from the target text; deleting a modifier, a prefix, and a suffix in the sentence to obtain a candidate sentence; statisticizing the candidate sentence, to determine a target sentence from the candidate sentence based on a statisticizing result of the candidate sentence; and using the target sentence as a new tag, and annotating the new tag in a text including the target tag group.

The present solution adds a tag with a higher popularity degree to a text, thereby solving the problem that a tag set is too fixed to reflect the user needs in time.

The present solution combines tags, extracts a corresponding sentence based on a combined tag group, and determines a new tag based on the extracted sentence, thereby refining the tag granularity, and solving the problem that an existing tag cannot summarize the meaning.

Fig. 8 is a schematic structural diagram of an apparatus for mining a tag provided in an embodiment of the present disclosure . Referring to Fig. 8, the apparatus 800 for mining a tag provided in an embodiment of the present disclosure includes: a category determining module 801, a tag determining module 802, and a tag combining module 803.

The category determining module 801 is configured to determine an existing tag and a category of the existing tag.

The tag determining module 802 is configured to determine a candidate tag from a target text associated with the category based on the existing tag.

The tag combining module 803 is configured to combine the existing tag and the candidate tag, and determine a new tag based on a combining result.

In an embodiment of the present disclosure, a candidate tag is determined from a target text associated with a category of an existing tag based on the existing tag; the existing tag and the candidate tag are combined, and a new tag is determined based on a combining result, thereby realizing mining of a new tag based on the existing tag.

In addition, the candidate tag is determined from the target text associated with the category of the existing tag, to limit a computing range of a combined tag, and eliminate tags that explicitly do not have a combination potential. The tags that do not have a combination potential refers to tags with a meaning after splitting being equal to a meaning before the splitting. For example, such tags may be "summer vegetables" and "summer travel." Because a combination of tags that have a combination potential can accurately depict a text content, the present solution can realize mining of an accurate tag, and will, after providing the accurate tag to a search engine or a recommendation engine, accurately distribute and present a text to a user, thereby improving the user's information acquisition efficiency and user experience.

Further, the category determining module includes: a category statisticizing unit configured to statisticize a category of a text including the existing tag; and a category determining unit configured to determine the category of the existing tag from the category of the text including the existing tag based on a statisticizing result of the category of the text.

Further, the tag determining module includes: a frequency statisticizing unit configured to statisticize co-occurrence frequencies of the existing tag with other tags in the target text; and a tag determining unit configured to determine the candidate tag from the other tags in the target text based on a statisticizing result of the co-occurrence frequencies.

Further, the category determining module includes: an existing tag determining unit configured to determine a tag with a popularity degree greater than a preset popularity threshold, and use the tag as the existing tag.

Further, the apparatus further includes: a result filtering module configured to filter the combining result based on a gap and/or a co-occurrence frequency of the existing tag with the candidate tag in the target text before the determining the new tag based on the combining result.

Further, the tag combining module includes: a text fragment extracting unit configured to extract at least one text fragment including a candidate tag group from the target text, where the candidate tag group is obtained by combining the existing tag and the candidate tag; and a new tag determining unit configured to determine the new tag based on the at least one text fragment.

Further, the new tag determining unit includes: a main component extracting subunit configured to extract main component information of the text fragment to obtain at least one main text component; and a new tag determining subunit configured to determine the new tag from the at least one main text component.

Further, the new tag determining subunit is configured to: statisticize the at least one main text component, to determine a target main text component from the at least one main text component based on a statisticizing result of the at least one main text component, and use the target main text component as the new tag.

Further, the apparatus further includes: a to-be-annotated text determining module configured to determine a to-be-annotated text including the existing tag and the candidate tag after the combining the existing tag and the candidate tag and determining the new tag based on the combining result; and a text annotating module configured to annotate the determined new tag in the to-be-annotated text.

According to an embodiment of the present disclosure, the present disclosure further provides an electronic device and a readable storage medium.

As shown in Fig. 9, a block diagram of an electronic device of the method for mining a tag according to embodiments of the present disclosure is shown. The electronic device is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 9, the electronic device includes: one or more processors 901, a memory 902, and interfaces for connecting various components, including a high-speed interface and a low-speed interface. The various components are interconnected using different buses, and may be mounted on a common motherboard or in other manners as required. The processor can process instructions for execution within the electronic device, including instructions stored in the memory or on the memory to display graphical information for a GUI on an external input/output apparatus (e.g., a display device coupled to an interface). In other implementations, a plurality of processors and/or a plurality of buses may be used, as appropriate, along with a plurality of memories. Similarly, a plurality of electronic devices may be connected, with each device providing portions of necessary operations (e.g., as a server array, a group of blade servers, or a multi-processor system) . In Fig. 9, a processor 901 is taken as an example.

The memory 902 is a non-transitory computer readable storage medium provided in embodiments of the present disclosure. The memory stores instructions executable by at least one processor, causing the at least one processor to perform the method for mining a tag provided in embodiments of the present disclosure. The non-transitory computer readable storage medium of embodiments of the present disclosure stores computer instructions. The computer instructions are used for causing a computer to perform the method for mining a tag provided in embodiments of the present disclosure.

As a non-transitory computer readable storage medium, the memory 902 may be configured to store non-transitory software programs, non-transitory computer-executable programs, and modules, e.g., the program instructions/modules (e.g., the category determining module 801, the tag determining module 802, and the tag combining module 803 shown in Fig. 8) corresponding to the method for mining a tag in embodiments of the present disclosure. The processor 901 runs non-transitory software programs, instructions, and modules stored in the memory 902, to execute various function applications and data processing of a server, i.e., implementing the method for mining a tag in embodiments of the method.

The memory 902 may include a program storage area and a data storage area, where the program storage area may store an operating system and an application program required by at least one function; and the data storage area may store, e.g., data created based on use of the electronic device for mining a tag. In addition, the memory 902 may include a high-speed random-access memory, and may further include a non-transitory memory, such as at least one disk storage component, a flash memory component, or other non-transitory solid state storage components. In some embodiments, the memory 902 alternatively includes memories disposed remotely relative to the processor 901, and these remote memories may be connected to the electronic device for mining a tag via a network. Examples of the above network include, but are not limited to, the Internet, an intranet, a local area network, a mobile communication network, and a combination thereof.

The electronic device of the method for mining a tag may further include: an input apparatus 903 and an output apparatus 904. The processor 901, the memory 902, the input apparatus 903, and the output apparatus 904 may be connected through a bus or in other manners. Bus connection is taken as an example in Fig. 9.

The input apparatus 903 may receive input digital or character information, and generate key signal inputs related to user settings and function control of the electronic device for performing the method for mining a tag, such as touch screen, keypad, mouse, trackpad, touchpad, pointing stick, one or more mouse buttons, trackball, joystick and other input apparatuses. The output apparatus 904 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a storage device and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer having a display apparatus (e.g., a cathode ray tube (CRT)) or an LCD monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including acoustic, speech, or tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network). Examples of the communication network include a local area network (LAN), a wide area network (WAN) and Internet.

The computer system may include a client and a server. The client and the server are generally remote from each other and typically interact through the communication network. The relationship between the client and the server is generated through computer programs running on the respective computers and having a client-server relationship to each other. The server may be a cloud server, also known as a cloud computing server or a cloud host, and is a host product in a cloud computing service system, so as to solve the defects of difficult management and weak service extendibility existing in conventional physical hosts and VPS services.

According to an embodiment of the present disclosure, the present disclosure further provides a computer program product including a computer program, where the computer program, when executed by a processor, implements the method for mining a tag.

The technology according to embodiments of the present disclosure realizes mining of an accurate tag based on an existing tag. It should be understood that the various forms of processes shown above can be used to reorder, add, or delete steps. For example, the steps disclosed in embodiments of the present disclosure can be executed in parallel, sequentially, or in different orders, as long as the desired results of the technical solutions disclosed in embodiments of the present disclosure can be achieved. This is not limited herein.

The above specific implementations do not constitute a limitation to the protection scope of the present disclosure. It should be understood by those skilled in the art that various modifications, combinations, sub-combinations, and replacements may be made according to the design requirements and other factors . Any modification, equivalent replacement, improvement, and the like made within the spirit and principle of the present disclosure should be included within the protection scope of the present disclosure.

## Claims

1. A method for mining a tag, comprising:
determining (S110) an existing tag and a category of the existing tag;
determining (S120) a candidate tag from a target text associated with the category based on the existing tag; and
combining (S130) the existing tag and the candidate tag, and determining a new tag based on a combining result.

2. The method according to claim 1, wherein the determining (S110) the category of the existing tag comprises:
statisticizing (S210) a category of a text including the existing tag; and
determining (S220) the category of the existing tag from the category of the text including the existing tag based on a statisticizing result of the category of the text.

3. The method according to claim 1 or 2, wherein the determining (S120) the candidate tag from the target text associated with the category based on the existing tag comprises:
statisticizing (S320) co-occurrence frequencies of the existing tag with other tags in the target text; and
determining (S330) the candidate tag from the other tags in the target text based on a statisticizing result of the co-occurrence frequencies.

4. The method according to any one of claims 1-3, wherein the determining (S110) the existing tag comprises:
determining a tag with a popularity degree greater than a preset popularity threshold, and using the tag as the existing tag.

5. The method according to any one of claims 1-4, wherein before the determining (S130) the new tag based on the combining result, the method further comprises:
filtering (S440) the combining result based on a gap and/or a co-occurrence frequency of the existing tag with the candidate tag in the target text.

6. The method according to any one of claims 1-5, wherein the determining (S130) the new tag based on the combining result comprises:
extracting (S540) at least one text fragment including a candidate tag group from the target text, wherein the candidate tag group is obtained by combining the existing tag and the candidate tag; and
determining (S550) the new tag based on the at least one text fragment.

7. The method according to claim 6, wherein the determining (S550) the new tag based on the at least one text fragment comprises:
extracting main component information of the text fragment to obtain at least one main text component; and
determining the new tag from the at least one main text component.

8. The method according to claim 7, wherein the determining the new tag from the at least one main text component comprises:
statisticizing the at least one main text component, to determine a target main text component from the at least one main text component based on a statisticizing result of the at least one main text component, and using the target main text component as the new tag.

9. The method according to any one of claims 1-8, wherein after the combining (S130) the existing tag and the candidate tag, and determining the new tag based on the combining result, the method further comprises:
determining (S640) a to-be-annotated text including the existing tag and the candidate tag; and
annotating (S650) the determined new tag in the to-be-annotated text.

10. An apparatus for mining a tag, comprising a plurality of modules (801, 802, 803) configured to implement the method according to any one of claims 1-9.

11. An electronic device, comprising:
at least one processor (901); and
a memory (902) communicatively connected with the at least one processor (901);
the memory (902) storing instructions executable by the at least one processor (901), and the instructions, when executed by the at least one processor (901), causing the at least one processor (901) to perform the method according to any one of claims 1-9.

12. A non-transitory computer readable storage medium (902) storing computer instructions, the computer instructions being used to cause a computer to perform the method according to any one of claims 1-9.

13. A computer program product comprising a computer program, the computer program, when executed by a processor (901), implementing the method according to any one of claims 1-9.
